# EUROPEAN PATENT APPLICATION

(11) **EP 4 524 844 A1**
(43) Date of publication of application: **19.03.2025**
(21) Application number: 23842240.6
(22) Date of filing: 17.07.2023
(51) Int. Cl.: G06Q 10/06

(54) **METHOD AND APPARATUS FOR EXECUTING SERVICE, STORAGE MEDIUM AND DEVICE**

(30) Priority: 18.07.2022 CN 202210845916
(71) Applicant: Alipay (Hangzhou) Information Technology Co., Ltd., Hangzhou, Zhejiang 310000 (CN)
(72) Inventor: LI, Nan, Hangzhou, Zhejiang 310000 (CN); WANG, Zhaoyang, Hangzhou, Zhejiang 310000 (CN); LIANG, Shiwei, Hangzhou, Zhejiang 310000 (CN); LOU, Yin, Hangzhou, Zhejiang 310000 (CN); QIAN, Chen, Hangzhou, Zhejiang 310000 (CN); LI, Yan, Hangzhou, Zhejiang 310000 (CN); ZHANG, Qiang, Hangzhou, Zhejiang 310000 (CN); LI, Jiayue, Hangzhou, Zhejiang 310000 (CN); XU, Jingli, Hangzhou, Zhejiang 310000 (CN)
(74) Representative: Fish & Richardson P.C.
(86) International application number: PCT/CN2023/107632
(87) International publication number: WO 2024/017177

(57) **Abstract**

This specification discloses service execution methods and apparatuses, storage media, and devices. Each condition used to construct a rule and an evaluation indicator corresponding to each condition are displayed; conditions selected by a user from candidate conditions are determined in response to a selection operation of the user; for each candidate condition, a temporary rule is determined based on the candidate condition and the conditions already selected by the user; a degree of reasonableness of each temporary rule is tested based on historical service data, and an evaluation indicator corresponding to each candidate condition is determined based on the degree of reasonableness of each temporary rule and displayed; a target rule is determined in response to a determining operation of the user when the user determines to generate the rule; and when an instruction for invoking the target rule is received, a service is executed based on the target rule and service data corresponding to the invocation instruction. The user can be assisted in reasonably selecting the conditions that constitute the target rule, to reduce anomalies in the service executed based on the target rule.

## Description

### TECHNICAL FIELD

This specification relates to the field of data processing technologies, and in particular, to service execution methods and apparatuses, storage media, and devices.

### BACKGROUND

Currently, protection of user privacy data has received more and more attention. In some service scenarios, it is necessary to draw service conclusions based on service data of users and rules, to execute services based on the service conclusions. For example, in a risk control scenario, it is necessary to draw, based on service data and a rule, a conclusion on whether an executed service is risky. Reasonableness of the service conclusion depends on reasonableness of the constructed rule.

In a current method, users construct rules based on their own experience and execute services based on the rules constructed by the users. However, simply relying on human experience to construct rules is highly subjective. When users are inexperienced, errors are prone to occur. Consequently, the constructed rules are unreasonable, and anomalies are likely to occur during service execution based on the rules.

### SUMMARY

This specification provides service execution methods and apparatuses to determine evaluation indicators of conditions used to construct a rule, provide a user with a reliable basis for selecting conditions, and assist the user in reasonably selecting conditions that constitute a target rule, so that the constructed target rule is more reasonable, thereby reducing anomalies in a service executed based on the target rule.

The following technical solutions are used in this specification. This specification provides a service execution method, where the method includes: displaying each condition used to construct a rule and an evaluation indicator corresponding to each condition, where for each condition, the evaluation indicator represents a degree of reasonableness of rule construction using the condition; determining, in response to a selection operation of a user, conditions selected by the user from candidate conditions; determining, for each candidate condition, a temporary rule based on the candidate condition and the conditions already selected by the user; testing a degree of reasonableness of each temporary rule based on historical service data, determining, based on the degree of reasonableness of each temporary rule, an evaluation indicator corresponding to each candidate condition, and displaying the evaluation indicator; determining a target rule in response to a determining operation of the user; and when an instruction for invoking the target rule is received, executing a service based on the target rule and service data corresponding to the invocation instruction.

Optionally, the displaying each condition used to construct a rule and an evaluation indicator corresponding to each condition specifically includes: determining a service conclusion corresponding to each piece of historical service data, to determine each positive sample and each negative sample; for each condition used to construct the rule, determining a quantity of positive samples or negative samples that meet the condition; determining, based on the quantity of the positive samples or the negative samples that meet the condition, the evaluation indicator corresponding to the condition; and displaying at least some conditions and evaluation indicators corresponding to the conditions.

Optionally, the determining, based on the quantity of the positive samples or the negative samples that meet the condition, the evaluation indicator corresponding to the condition specifically includes: when the target rule is used to filter positive samples, determining, based on the quantity of the positive samples that meet the condition and a total quantity of samples that meet the condition, the evaluation indicator corresponding to the condition; or when the target rule is used to filter negative samples, determining, based on the quantity of the negative samples that meet the condition and a total quantity of samples that meet the condition, the evaluation indicator corresponding to the condition.

Optionally, the determining, for each candidate condition, a temporary rule based on the candidate condition and the conditions already selected by the user specifically includes: determining, in response to a selection operation of the user, a target condition from the conditions already selected by the user, and obtaining configuration data; determining, for each candidate condition, a connection relationship between the candidate condition and the target condition based on the configuration data; and adding, based on the connection relationship, the candidate condition to the conditions already selected by the user, to obtain the temporary rule, where the connection relationship includes at least one of an "AND" connection or an "OR" connection.

Optionally, the testing a degree of reasonableness of each temporary rule based on historical service data, and determining, based on the degree of reasonableness of each temporary rule, an evaluation indicator corresponding to each candidate condition specifically includes: determining a service conclusion corresponding to each piece of historical service data, to determine each positive sample and each negative sample; for each temporary rule, testing the temporary rule based on each sample to determine a quantity of samples that meet the temporary rule; determining a type of evaluation indicator in the current test based on configuration data, where the type of evaluation indicator includes at least one of precision or recall; and when the type of evaluation indicator is precision, using samples that belong to a same type as samples that the target rule is used to filter, among the samples that meet the temporary rule, as correctly classified samples, using a ratio of a quantity of the correctly classified samples to a quantity of the samples that meet the temporary rule as the degree of reasonableness of the temporary rule, and using the degree of reasonableness as the evaluation indicator of the candidate condition in the temporary rule; or when the type of evaluation indicator is recall, using a ratio of a quantity of positive samples among the samples that meet the temporary rule to a total quantity of positive samples among all samples as the degree of reasonableness of the temporary rule, and using the degree of reasonableness as the evaluation indicator of the candidate condition in the temporary rule.

Optionally, the determining, for each candidate condition, a temporary rule based on the candidate condition and the conditions already selected by the user specifically includes: determining, in response to a selection operation of the user, a target condition from the conditions already selected by the user, and obtaining configuration data; determining a type of evaluation indicator in the current test based on the configuration data; and when the type of evaluation indicator is rule similarity, replacing, for each candidate condition, the target condition with the candidate condition to obtain the temporary rule.

Optionally, the testing a degree of reasonableness of each temporary rule based on historical service data, and determining, based on the degree of reasonableness of each temporary rule, an evaluation indicator corresponding to each candidate condition specifically includes: determining a pending rule based on the conditions already selected by the user; determining each sample based on the historical service data; for each temporary rule, testing the temporary rule and the pending rule separately based on each sample, determining samples that meet the temporary rule to obtain a first sample set, and determining samples that meet the pending rule to obtain a second sample set; determining an intersection over union of the first sample set and the second sample set as a similarity between the temporary rule and the pending rule; and using the determined similarity as the degree of reasonableness of the temporary rule, and using the degree of reasonableness as the evaluation indicator of the candidate condition in the temporary rule.

Optionally, the testing a degree of reasonableness of each temporary rule based on historical service data, and determining, based on the degree of reasonableness of each temporary rule, an evaluation indicator corresponding to each candidate condition specifically includes: determining a pending rule based on the conditions already selected by the user; determining a positive sample from each piece of historical service data; for each temporary rule, testing the temporary rule and the pending rule separately based on each positive sample, determining each positive sample that meets the temporary rule to obtain a third sample set, and determining each positive sample that meets the pending rule to obtain a fourth sample set; determining an intersection over union of the third sample set and the fourth sample set as a similarity between the temporary rule and the pending rule; and using the determined similarity as the degree of reasonableness of the temporary rule, and using the degree of reasonableness as the evaluation indicator of the candidate condition in the temporary rule.

This specification provides a service execution apparatus, where the apparatus includes: a first display module, configured to display each condition used to construct a rule and an evaluation indicator corresponding to each condition, where for each condition, the evaluation indicator represents a degree of reasonableness of rule construction using the condition; a first responding module, configured to determine, in response to a selection operation of a user, conditions selected by the user from candidate conditions; a temporary rule determining module, configured to determine, for each candidate condition, a temporary rule based on the candidate condition and the conditions already selected by the user; an indicator determining module, configured to test a degree of reasonableness of each temporary rule based on historical service data, determine, based on the degree of reasonableness of each temporary rule, an evaluation indicator corresponding to each candidate condition, and display the evaluation indicator; a second responding module, configured to determine a target rule in response to a determining operation of the user; and an execution module, configured to execute, when an instruction for invoking the target rule is received, a service based on the target rule and service data corresponding to the invocation instruction.

This specification provides a computer-readable storage medium. The storage medium stores a computer program, and when the computer program is executed by a processor, the above-mentioned service execution method is implemented.

This specification provides an electronic device, including a memory, a processor, and a computer program stored in the memory and capable of running on the processor, where when the processor executes the program, the above-mentioned service execution method is implemented.

At least one of the above-mentioned technical solutions used in this specification can achieve the following beneficial effects: In the above-mentioned service execution method, each condition used to construct the rule and the evaluation indicator corresponding to each condition are displayed; the conditions selected by the user from the candidate conditions are determined in response to the selection operation of the user; for each candidate condition, the temporary rule is determined based on the candidate condition and the conditions already selected by the user; the degree of reasonableness of each temporary rule is tested based on the historical service data, and the evaluation indicator corresponding to each candidate condition is determined based on the degree of reasonableness of each temporary rule and displayed; the target rule is determined in response to the determining operation of the user when the user determines to generate the rule; and when the instruction for invoking the target rule is received, the service is executed based on the target rule and the service data corresponding to the invocation instruction.

It can be learned from the above-mentioned that the service execution method provided in this specification can reasonably recommend conditions for the target rule based on the evaluation indicators, and assist the user in reasonably selecting the conditions that constitute the target rule. Therefore, the target condition determined in response to the operation of the user is more reasonable, further, reasonableness of service execution based on the reasonable target condition is higher, and a probability of anomalies during service execution is lower. In addition, in the process of constructing the target rule, because the evaluation indicators of the conditions are determined and displayed, the user can be provided with a reasonable and reliable basis for selecting the conditions that constitute the target rule, so that the user can reasonably select the conditions based on personal experience and the evaluation indicators of the conditions. Moreover, for the same condition, an evaluation indicator of the condition is not invariable. As the conditions selected by the user change, the evaluation indicators of the conditions are recalculated and updated in real time to ensure reliability and reasonableness of the evaluation indicators. As such, the target rule composed of the conditions selected by the user is reasonable and reliable, and the service executed based on the target rule is not prone to anomalies.

### BRIEF DESCRIPTION OF DRAWINGS

The accompanying drawings described here are used to provide further understanding of this specification and constitute a part of this specification. The example embodiments of this specification and their descriptions are used to explain this specification, and do not constitute an undue limitation on this specification. In the accompanying drawings:
FIG. 1 is a schematic flowchart illustrating a service execution method, according to this specification;
FIG. 2 is a schematic diagram illustrating a user interface for constructing a rule, according to this specification;
FIG. 3 is a partial schematic diagram illustrating a user interface for constructing a rule, according to this specification;
FIG. 4 is a schematic diagram illustrating a system framework, according to this specification;
FIG. 5 is a schematic diagram for determining a test result, according to this specification;
FIG. 6 is a schematic diagram illustrating a service execution apparatus, according to this specification; and
FIG. 7 is a schematic diagram illustrating an electronic device, according to this specification.

### DESCRIPTION OF EMBODIMENTS

At present, there is no solution to constructing rules through man-machine interaction with reference to user experience and calculation results of algorithms that serve as a basis for users to select conditions, and executing services based on the rules. A current method is usually as follows: A user constructs rules solely based on experience, or constructs rules in an end-to-end manner solely based on algorithms, for example, based on a CN2 algorithm. However, rules generated by algorithms that focus solely on data also have problems, and rules generated solely depending on the algorithms are not reasonable enough. The user can perform inference with reference to data to obtain new information to reasonably construct rules. Therefore, in the algorithm-based rule construction method, the user can only adjust the rules after the rules are generated. The process is cumbersome and inconvenient, and the generated rules are not reasonable enough.

To at least partially resolve the problems of the existing method, this specification provides a service execution method. Based on the service execution method, a user can reasonably select, based on personal experience and evaluation indicators of conditions, conditions that constitute a target rule, so that a service executed based on the target rule is not prone to anomalies.

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some but not all of embodiments of this specification. Based on embodiments of this specification, all other embodiments obtained by a person of ordinary skill in the art without creative efforts fall within the protection scope of this specification.

The technical solutions provided by the embodiments of this specification are described in detail below with reference to the accompanying drawings.

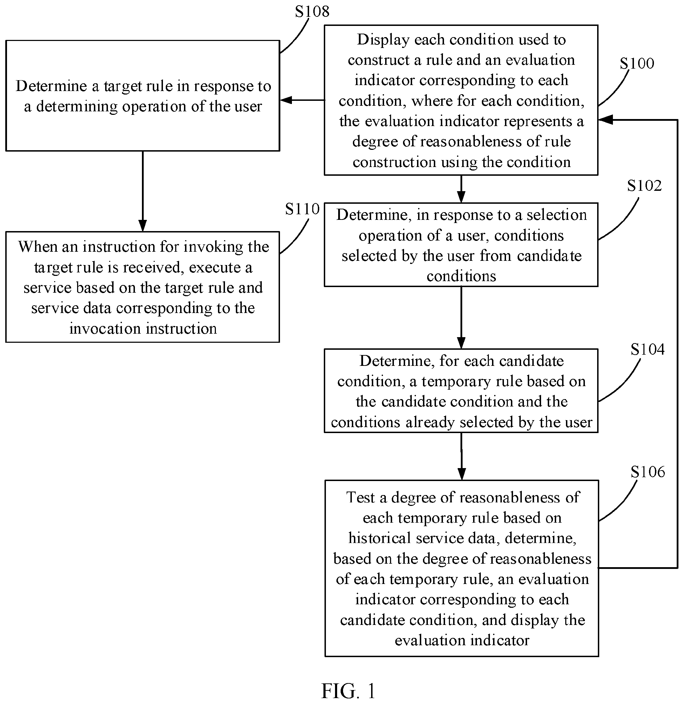

FIG. 1 is a schematic flowchart illustrating a service execution method, according to this specification. The method specifically includes the following steps S100 to S110.

S100: Display each condition used to construct a rule and an evaluation indicator corresponding to each condition, where for each condition, the evaluation indicator represents a degree of reasonableness of rule construction using the condition.

In this specification, the service execution method can be executed by a terminal, such as a personal computer (PC). The terminal can determine evaluation indicators of conditions used to construct rules and display the evaluation indicators to a user; and by interacting with the terminal, the user can select conditions for constituting a target rule. Alternatively, the service execution method can be executed by a server, and the server can interact with a terminal, so that the terminal displays conditions and evaluation indicators to a user. Certainly, the server can also be provided with a display device, and the display device of the server displays the conditions and the corresponding evaluation indicators. It is worthwhile to note that when the method is executed by the server, the server may be a single server or a cluster including several servers, which is not limited here in this specification. The following description is provided by assuming that the service execution method is executed by the terminal.

In this specification, a rule may be composed of several conditions. A rule is used to draw a service conclusion based on service data of a service. One rule may correspond to one service conclusion, and service conclusions corresponding to different rules are not completely the same. For example, in a risk control scenario, a service conclusion of a service rule may include: risky or risk-free. For each rule, when it is determined, based on service data of a service, that the rule is met, it is determined that the service meets a service conclusion corresponding to the rule.

In this specification, the target rule is a rule constructed with a goal of accurately drawing a service conclusion corresponding to the rule based on service data and the rule.

When constructing the target rule, first, the server can display each condition used to construct the rule and an evaluation indicator corresponding to each condition. For each condition, the evaluation indicator represents a degree of reasonableness of rule construction using the condition. The user can select conditions from the conditions based on the displayed conditions and the evaluation indicators of the conditions. The conditions selected by the user are conditions included in the target rule to be generated and constituting the target rule. The conditions used to construct the rule, that is, the conditions that the user can select to constitute the target rule, are candidate conditions.

In one or more embodiments of this specification, in a process of constructing the target rule, before the user determines to generate the target rule, the conditions already selected by the user can be regarded as constituting a pending rule, and the user can continue to select conditions to be added to the pending rule, or can delete the conditions in the pending rule.

In this specification, the terminal may sort the conditions based on the evaluation indicators corresponding to the conditions for constructing the rule, and display at least part of the conditions and their evaluation indicators based on a sorting result.

When sorting the conditions based on the evaluation indicators, the terminal can directly sort the conditions based on the evaluation indicator corresponding to each condition. Alternatively, the terminal can group the conditions and sort the conditions in each group. For example, the terminal can determine features included in each condition, and for each feature, group conditions including the feature into a group. Then for each group, the terminal sorts the conditions in the group in descending order based on the evaluation indicators corresponding to the conditions in the group. Then the terminal can determine a top condition in the group based on a sorting result. Then the terminal can sort groups based on evaluation indicators of top conditions corresponding to the groups. Finally, the terminal can display at least part of the condition groups and an evaluation indicator of a top condition in each condition group to the user based on a group sorting result.

In this specification, the form of a condition is not limited. For example, for each condition, the condition may be composed of a feature, an operator, and a threshold. Based on historical service data, features used to construct conditions and feature values of the features in different historical service data can be determined. Feature values corresponding to the same feature in different service data are different. For each feature value of each feature, the feature value can be used as a threshold to determine a feature value pair based on the feature and the threshold. The feature value pair can be combined with each predetermined operator to determine each condition corresponding to the feature. For example, a condition may be: age > 35, where age is a feature, 35 is a threshold, and ">" is an operator.

In one or more embodiments of this specification, the threshold may not be equal to the feature value in the historical service data, and may be other predetermined values, which can be set based on needs.

S102: Determine, in response to a selection operation of the user, conditions selected by the user from candidate conditions.

In one or more embodiments of this specification, after each condition and the evaluation indicator corresponding to each condition are displayed, the user can select conditions based on a display result and initiate the selection operation.

The terminal can determine, in response to the selection operation of the user, the conditions selected by the user from the candidate conditions.

In one or more embodiments of this specification, the terminal can determine a condition set, and determine candidate conditions from the condition set.

The candidate conditions are at least part of the conditions in the condition set. For example, the conditions in the condition set can be repeatedly selected by the user and repeatedly added to the pending rule. Assuming that the condition set includes 100 conditions, after the user selects 10 conditions, the 10 conditions are the conditions already selected by the user, and all the 100 conditions in the condition set can be used as candidate conditions. Alternatively, to avoid duplicate conditions in the target rule that is finally constructed, the candidate conditions may also be remaining conditions in the condition set other than the conditions already selected by the user.

In one or more embodiments of this specification, a connection relationship between conditions in a rule is not limited. The conditions may all be connected by "AND", or all be connected by "OR", or some conditions may be connected by "AND", and some conditions may be connected by "OR", which can be set based on needs. For example, several conditions in a rule can be grouped, and conditions in the same group may be connected by "OR", and different groups may be connected by "AND". For example, it is assumed that a rule is: (condition 1 or condition 2) and (condition 3 or condition 4) and (condition 5). The "AND" connection is a connection between different groups, and the "OR" connection is a connection between conditions in the same group. The rule includes three layers (groups). For example, a specified position may be the second layer, or the second condition of the second layer.

Furthermore, in one or more embodiments of this specification, a connection relationship between the conditions selected by the user for constructing the target rule may be a predetermined fixed relationship. In other words, the conditions selected by the user are connected in the fixed relationship. Alternatively, the user can configure the connection relationship through a user interface, and the conditions selected by the user and conditions selected by the user in the past may be connected based on a connection relationship configured by the user, which can be specifically set based on needs and is not limited here in this specification.

S104: Determine, for each candidate condition, a temporary rule based on the candidate condition and the conditions already selected by the user.

In one or more embodiments of this specification, after the conditions already selected by the user are changed, such as increased or decreased, or part of the selected conditions are replaced, the terminal can determine the evaluation indicator of each condition and display the evaluation indicator.

Specifically, the terminal can determine, for each candidate condition, the temporary rule based on the candidate condition and the conditions already selected by the user. The purpose is to facilitate a subsequent test on a degree of reasonableness of the temporary rule to determine the evaluation indicator of the candidate condition based on the degree of reasonableness. In other words, by determining the temporary rule based on the candidate condition and the pending rule, a test is performed on the evaluation indicator of the candidate condition in the temporary rule if the candidate condition is added to the temporary rule, to evaluate advantages and disadvantages of the candidate condition.

It is worthwhile to note that among the conditions used to determine the temporary rule, the conditions already selected by the user include the conditions selected by the user and determined in response to the user operation in step S104, and the conditions already selected by the user and determined historically in response to the selection operation of the user in the process of constructing the target rule.

The temporary rule is a rule temporarily generated to determine the evaluation indicator corresponding to the candidate condition. The candidate condition in the temporary rule may not necessarily be a condition constituting the target rule.

S106: Test a degree of reasonableness of each temporary rule based on historical service data, determine, based on the degree of reasonableness of each temporary rule, an evaluation indicator corresponding to each candidate condition, and display the evaluation indicator.

In one or more embodiments of this specification, after determining temporary rules, the terminal can test the degree of reasonableness of each temporary rule based on the historical service data, and determine, based on the degree of reasonableness of each temporary rule, the evaluation indicator corresponding to each candidate condition, and display each candidate condition and the evaluation indicator corresponding to each candidate condition. In other words, after the evaluation indicator corresponding to each candidate condition is determined, step S100 is executed.

The test is to match the historical service data with a condition or rule to determine historical service data that meet the condition or rule. When the user does not select any condition, an object of the test is a condition. When a condition is selected, an object of the test is a temporary rule. Alternatively, when the user does not select any condition, each condition can be used as a temporary rule.

In this specification, a plurality of types of evaluation indicators may be included. For example, at least one of precision, recall, and harmonic mean of precision and recall may be included.

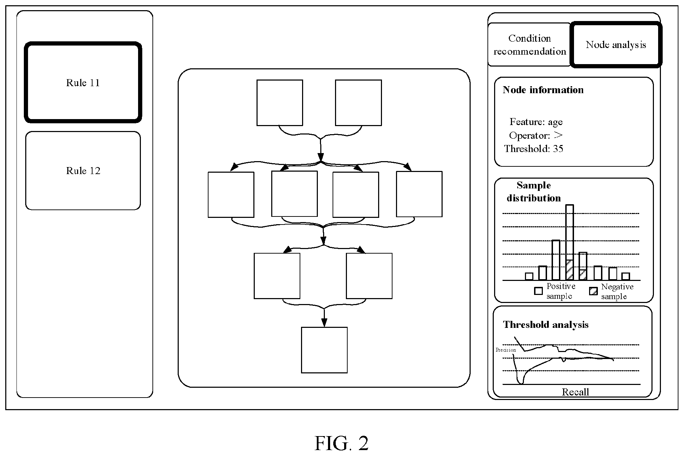

As described above, when the conditions and the evaluation indicators corresponding to the conditions are displayed, they can be displayed in units of conditions, or the conditions may be grouped and displayed in units of groups. The terminal can display each condition group and the evaluation indicator corresponding to the top condition in the condition group to the user. In addition, the conditions already selected by the user can also be displayed, and the conditions already selected by the user can be displayed in the form of a directed acyclic graph, as shown in FIG. 2.

FIG. 2 is a schematic diagram illustrating a user interface for constructing a rule, according to this specification.

As shown in the figure, the user interface displays three modules from left to right. The first module displays currently generated rules 11 and 12. A bold rectangle corresponding to rule 11 indicates that the target rule currently displayed in construction is rule 11. The second module displays a pending rule in the form of a directed acyclic graph composed of the conditions already selected by the user. In the second module, different squares connected by arrows represent different nodes of the directed acyclic graph. One square corresponds to one node, and one node corresponds to one condition already selected by the user. The direction of an arrow indicates an execution order of conditions at different layers (rows). In the directed acyclic graph, conditions at the same layer (that is, the same row) are connected by "OR", and conditions at different layers are connected by "AND". Conditions at the same layer can be regarded as a group of conditions.

The third module can display a condition recommendation result and a node analysis result. A bold rectangle corresponding to node analysis indicates that the node analysis result is currently displayed. A node information submodule displays information of one of nodes of rule 11, including a feature: age, an operator: >, and a threshold: 35. A sample distribution submodule displays distribution of each sample determined based on various historical service data and feature values corresponding to the age feature. In a histogram, a horizontal axis represents the feature values, and a vertical axis represents a quantity of samples. Diagonally striped bars are negative samples, and unfilled bars represent positive samples. A precision-recall (PR) curve corresponding to current rule 11 is displayed in a threshold analysis module. An upper curve represents a PR curve determined based on a training set composed of samples, and a lower curve represents a PR curve determined based on a validation set composed of samples. The samples corresponding to the training set and the validation set are not completely the same, or may be completely different.

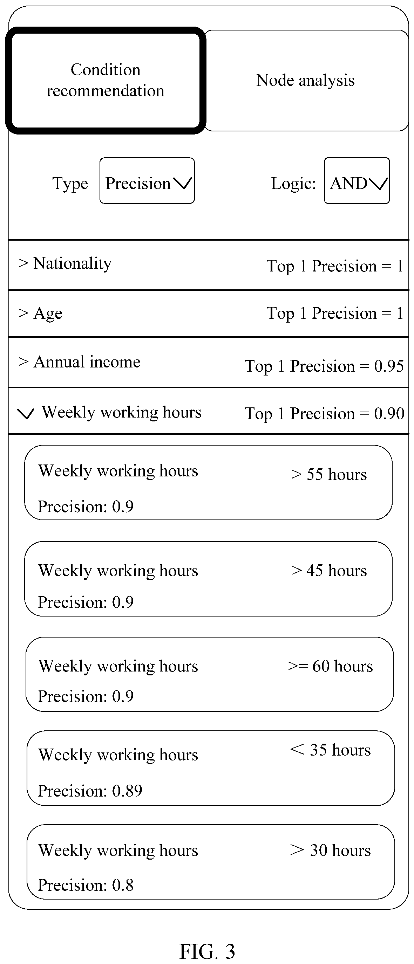

The condition recommendation result is shown in FIG. 3.

FIG. 3 is a partial schematic diagram illustrating a user interface for constructing a rule, according to this specification. As shown in the figure, a bold rectangular box corresponding to the condition recommendation indicates that a condition recommendation result is currently displayed. As can be learned from FIG. 3, one feature corresponds to one group of conditions including the same feature, but operators and thresholds of the conditions are not completely the same. Condition groups corresponding to different features are displayed based on a result of sorting by precision, and the conditions can be recommended based on the type of configured evaluation indicators and logic of the recommendation. The type of the current evaluation indicator is precision, and the logic is "AND". The user can change the type of the evaluation indicator and the logic by operating a drop-down arrow. The logic is a connection relationship, which is a connection relationship between a recommended condition and one condition or a group of conditions already selected by the user in current rule 11.

As can be learned from FIG. 3, the displayed features include: nationality, where precision of the top (TOP 1) condition in the corresponding condition group is 1; age, where precision of the top condition in the corresponding condition group is 1; annual income, where precision of the top condition in the corresponding condition group is 0.95; and weekly working hours, where precision of the top condition in the corresponding condition group is 0.90. The user can expand the conditions in the condition group corresponding to the feature by clicking the ">" symbol before the feature "weekly working hours". After expansion, the ">" symbol changes to a drop-down arrow before "weekly working hours", as shown in the figure. It can be learned that the conditions corresponding to "weekly working hours" include "weekly working hours > 55 hours", with precision of 0.9, "weekly working hours > 45 hours", with precision of 0.9, "weekly working hours >= 60 hours", with precision of 0.9, "weekly working hours < 35 hours", with precision of 0.89, and "weekly working hours > 30 hours", with precision of 0.8. The user can click the corresponding condition to initiate a selection operation. The terminal can determine, in response to the selection operation of the user, the condition selected by the user, and add the condition selected by the user to rule 11 in an "AND" connection manner, thereby updating the conditions already selected by the user in rule 11.

S108: Determine the target rule in response to a determining operation of the user.

In this specification, the user can initiate the determining operation at any time. The terminal can determine the target rule based on the conditions already selected by the user in response to the determining operation of the user.

It is worthwhile to note that, because the user can initiate the determining operation at any time, after step S100 is executed, step S108 can also be executed.

S110: When an instruction for invoking the target rule is received, execute a service based on the target rule and service data corresponding to the invocation instruction.

When receiving the instruction for invoking the target rule, the terminal can execute the service based on the target rule and the service data corresponding to the invocation instruction, to determine, based on the target rule, a service conclusion of the service corresponding to the invocation instruction.

Based on the service execution method shown in FIG. 1, each condition used to construct the rule and the evaluation indicator corresponding to each condition are displayed; the conditions selected by the user from the candidate conditions are determined in response to the selection operation of the user; for each candidate condition, the temporary rule is determined based on the candidate condition and the conditions already selected by the user; the degree of reasonableness of each temporary rule is tested based on the historical service data, and the evaluation indicator corresponding to each candidate condition is determined based on the degree of reasonableness of each temporary rule and displayed; the target rule is determined in response to the determining operation of the user when the user determines to generate the rule; and when the instruction for invoking the target rule is received, the service is executed based on the target rule and the service data corresponding to the invocation instruction.

It can be learned from the above-mentioned method that the method can reasonably recommend conditions for the target rule based on the evaluation indicators, and assist the user in reasonably selecting the conditions that constitute the target rule. Therefore, a target condition determined in response to the operation of the user is more reasonable, further, reasonableness of service execution based on the reasonable target condition is higher, and a probability of anomalies during service execution is lower. In addition, in the process of constructing the target rule, because the evaluation indicators of the conditions are determined and displayed, the user can be provided with a reasonable and reliable basis for selecting the conditions that constitute the target rule, so that the user can reasonably select the conditions based on personal experience and the evaluation indicators of the conditions. Moreover, for the same condition, an evaluation indicator of the condition is not invariable. As the conditions selected by the user change, the evaluation indicators of the conditions are recalculated and updated in real time to ensure reliability and reasonableness of the evaluation indicators. As such, the target rule composed of the conditions selected by the user is reasonable and reliable, and the service executed based on the target rule is not prone to anomalies.

In addition, in step S 100, when displaying each condition used to construct the rule and the evaluation indicator corresponding to each condition, the terminal can specifically determine service conclusions corresponding to the historical service data to determine positive samples and negative samples; for each condition used to construct the rule, determine a quantity of positive samples or negative samples that meet the condition; and then determine, based on the quantity of the positive samples or the negative samples that meet the condition, the evaluation indicator corresponding to the condition, and display at least some of the conditions and evaluation indicators corresponding to the conditions.

As described above, the target rule corresponds to a service conclusion, where the service conclusion determines whether the target rule is used to filter the positive samples or the negative samples. For example, in a risk control scenario, service conclusions may include: risky and risk-free. When there is a risky service, a goal of a service platform is to accurately identify the risky service to take a corresponding response strategy. Therefore, the service conclusion is that the risky service is a service that needs more attention and is expected to be identified more accurately. Therefore, the "risky" service conclusion can correspond to the positive samples, and the "risk-free" service conclusion corresponds to the negative samples. "Risky" is a label corresponding to the positive samples, and "risk-free" is a label corresponding to the negative samples. Different types of evaluation indicators are determined based on different samples.

Therefore, the terminal can obtain configuration data and determine a type of evaluation indicator in the current test based on the configuration data. Based on the determined type, the terminal can test the degree of reasonableness of each condition based on the historical service data, as the evaluation indicator of each condition. The configuration data include at least the type of evaluation indicator and the connection relationship of the condition.

When the type is precision, and the target rule is used to filter the positive samples, the terminal can determine, based on the quantity of the positive samples that meet the condition and a total quantity of samples that meet the condition, the evaluation indicator corresponding to the condition. When the target rule is used to filter the negative samples, the terminal can determine, based on the quantity of the negative samples that meet the condition and a total quantity of samples that meet the condition, the evaluation indicator corresponding to the condition.

When the type is recall, the terminal can determine a quantity of positive samples among the samples that meet the condition as the first sample quantity, and determine a total quantity of positive samples among all samples as the second sample quantity. Then the terminal can determine the evaluation indicator of the condition based on a ratio of the first sample quantity to the second sample quantity.

When the type is harmonic mean, the terminal can first determine the evaluation indicator of precision and the evaluation indicator of recall corresponding to the condition, then determine a sum of the evaluation indicator of precision and the evaluation indicator of recall, determine a product of the evaluation indicator of precision and the evaluation indicator of recall, and redetermine the evaluation indicator of the condition based on a ratio of the determined product to the sum.

In this specification, for the historical service data used as samples, precision can be specifically a probability that a service conclusion drawn from the samples based on the rule is a correct conclusion. Recall can be a probability of a sample whose label is identified as a key label based on the rule. The harmonic mean of precision and recall is an F 1 score of precision and recall.

In step S104, when determining the temporary rule, the terminal can determine the target condition from the conditions already selected by the user, and obtain the configuration data; then determine, for each candidate condition, a connection relationship between the candidate condition and the target condition based on the configuration data; and add, based on the determined connection relationship, the candidate condition to the conditions already selected by the user, to obtain the temporary rule. In other words, based on the connection relationship, the candidate condition is added to the pending rule to connect the target rule. The target condition can be a condition in a predetermined position, for example, can be a condition most recently selected by the user, or a last condition in the pending rule.

The connection relationship includes at least one of an "AND" connection or an "OR" connection.

In addition, the user can select the target condition. The terminal can determine, in response to a selection operation of the user, the target condition from the conditions already selected by the user, and obtain the configuration data; determine, for each candidate condition, a connection relationship between the candidate condition and the target condition based on the configuration data; and add, based on the connection relationship, the candidate condition to the conditions already selected by the user, to obtain the temporary rule.

In this specification, each time an evaluation indicator corresponding to a condition is determined and displayed, it is a recommendation operation. The user can modify a connection relationship corresponding to each recommendation operation. When the user does not modify the connection relationship through the user interface, the connection relationship is a predetermined initial connection relationship. After the user modifies the connection relationship, the connection relationship corresponding to the recommendation operation remains the modified connection relationship until the user modifies the connection relationship next time, and the connection relationship defaults to the connection relationship most recently modified by the user. In addition, the user can also modify the type of evaluation indicator through the user interface. When the user does not modify the type of evaluation indicator through the user interface, the type of evaluation indicator is a predetermined initial type. After the user modifies the type of evaluation indicator, the type of evaluation indicator corresponding to the recommendation operation remains the modified type until the user modifies the type of evaluation indicator next time, and the type of evaluation indicator defaults to the type most recently modified by the user.

After the user modifies the connection relationship and/or the type of evaluation indicator through the user interface, the configuration data is updated.

In other words, the user can modify the configuration data. After the user modifies the configuration data, the configuration data keep the latest modification result before the user modifies the configuration data next time.

In addition, in step S106, when testing the degree of reasonableness of each temporary rule based on the historical service data, and determining, based on the degree of reasonableness of each temporary rule, the evaluation indicator corresponding to each candidate condition, the terminal can specifically determine a service conclusion corresponding to each piece of historical service data to determine each positive sample and each negative sample; then for each temporary rule, test the temporary rule based on each sample to determine a quantity of samples that meet the temporary rule; and then determine the type of evaluation indicator in the current test based on the configuration data, where the type of evaluation indicator includes at least one of precision or recall.

When the type of evaluation indicator is precision, the terminal can use samples that belong to the same type as samples that the target rule is used to filter, among the samples that meet the temporary rule, as correctly classified samples. In other words, when the target rule is used to filter positive samples, positive samples among the samples that meet the temporary rule can be used as correctly classified samples. When the target rule is used to filter negative samples, negative samples among the samples that meet the temporary rule are used as correctly classified samples. The terminal can use a ratio of a quantity of the correctly classified samples to a quantity of the samples that meet the temporary rule as the degree of reasonableness of the temporary rule, and use the degree of reasonableness as the evaluation indicator of the candidate condition in the temporary rule.

When the type of evaluation indicator is recall, the terminal uses a ratio of a quantity of positive samples among the samples that meet the temporary rule to a total quantity of positive samples among all samples as the degree of reasonableness of the temporary rule, and uses the degree of reasonableness as the evaluation indicator of the candidate condition in the temporary rule.

Certainly, the type of evaluation indicator may also include the F1 score. When the type of evaluation indicator is the F 1 score, the terminal can first determine the evaluation indicator of precision and the evaluation indicator of recall corresponding to the temporary rule, then determine the sum of the evaluation indicator of precision and the evaluation indicator of recall, determine the product of the evaluation indicator of precision and the evaluation indicator of recall, and redetermine the evaluation indicator of the temporary rule based on the ratio of the determined product to the sum.

In addition, because the target rule is composed of a plurality of conditions, when the service is executed based on the target rule, different conditions evaluate the service from different dimensions based on the service data of the service to draw a conclusion on whether the service meets the target rule. However, there may be a case that the service data just avoid a condition in the target rule, and consequently, the service that should meet the target rule is determined as not meeting the target rule, resulting in an inaccurate service conclusion determined for the service. Therefore, to enhance robustness of the same group of conditions (that is, anti-attack capabilities), similar conditions can also be determined for the same group of conditions to obtain a plurality of guarantees.

In this specification, the type of evaluation indicator may also include rule similarity.

In step S104, when determining the temporary rule, the terminal can also determine, in response to a selection operation of the user, the target condition from the conditions already selected by the user, and obtain the configuration data; and determine the type of evaluation indicator in the current test based on the configuration data. When the type of evaluation indicator is rule similarity, the terminal can replace, for each candidate condition, the target condition with the candidate condition to obtain the temporary rule.

It is worthwhile to note that when the target condition is replaced with the candidate condition, the replacement is still performed based on the original connection relationship between the target condition and other conditions already selected by the user. In addition, the target condition is replaced with the candidate condition only for calculating the evaluation indicator of the candidate condition. After the user selects the candidate condition based on the evaluation indicator of the candidate condition, the candidate condition is added to pending rules including the target rule. In other words, the target condition is not really replaced from the pending rules unless the user deletes the target rule from the pending rules.

Furthermore, after the user selects a candidate condition, the candidate condition and the target rule may be connected by "OR".

Correspondingly, in step S106, the terminal can also determine a pending rule based on the conditions already selected by the user; determine each sample based on the historical service data; then for each temporary rule, test the temporary rule and the pending rule separately based on each sample, determine samples that meet the temporary rule to obtain a first sample set, and determine samples that meet the pending rule to obtain a second sample set; and then determine an intersection over union of the first sample set and the second sample set as a similarity between the temporary rule and the pending rule. The terminal can use the determined similarity as the degree of reasonableness of the temporary rule, and use the degree of reasonableness as the evaluation indicator of the candidate condition in the temporary rule.

Specifically, the terminal can determine an intersection of the first sample set and the second sample set, determine a union of the first sample set and the second sample set, and use a ratio of a quantity of samples in the intersection to a quantity of samples in the union as the intersection over union of the first sample set and the second sample set.

In one or more embodiments of this specification, the similarity between the pending rule and the temporary rule may also be determined based only on a positive sample.

Therefore, the terminal can also determine a pending rule based on the conditions already selected by the user; determine a positive sample from each piece of historical service data; then for each temporary rule, test the temporary rule and the pending rule separately based on each positive sample, determine each positive sample that meets the temporary rule to obtain a third sample set, and determine each positive sample that meets the pending rule to obtain a fourth sample set; then determine an intersection over union of the third sample set and the fourth sample set as a similarity between the temporary rule and the pending rule; and use the determined similarity as the degree of reasonableness of the temporary rule. The terminal can use the degree of reasonableness as the evaluation indicator of the candidate condition in the temporary rule.

Similarly, the terminal can determine an intersection of the third sample set and the fourth sample set, determine a union of the first sample set and the second sample set, and use a ratio of a quantity of samples in the determined intersection to a quantity of samples in the union as the intersection over union of the third sample set and the fourth sample set.

In one or more embodiments of this specification, the terminal can use an evaluation indicator corresponding to a rule similarity determined based on all samples as a first evaluation indicator, and use an evaluation indicator corresponding to a rule similarity determined based on the positive samples as the second indicator.

When displaying the conditions and their evaluation indicators, the terminal can sort the conditions based on at least one of the first indicator or the second indicator of each condition.

In addition, after determining the first indicator and the second indicator, the terminal can also determine a comprehensive indicator based on the first indicator and the second indicator as an evaluation indicator corresponding to the rule similarity, and sort each condition based on the comprehensive indicator to display each condition and its comprehensive indicator based on a sorting result.

In addition, after determining the evaluation indicators corresponding to the candidate conditions and the rule similarity, the terminal can determine, for each candidate condition, whether the evaluation indicator of the candidate condition is greater than a predetermined indicator threshold, and if yes, determine that the candidate condition is a condition similar to the target condition.

The terminal can sort conditions similar to the target condition based on evaluation indicators of the conditions similar to the target condition, and display the conditions similar to the target condition and their evaluation indicators based on a sorting result.

In one or more embodiments of this specification, the terminal can also determine an evaluation indicator of a pending rule composed of conditions cumulatively selected by the current user to assist the user in determining whether to determine the target rule, or delete some of the selected conditions to make the pending rule better.

Certainly, as described above, the user can also delete conditions in the pending rule. For example, after the user gradually selects conditions, if it is found that the evaluation indicator of the pending rule is reduced, some of the conditions can be deleted. Therefore, the terminal can also determine, in response to a deletion operation of the user, a to-be-deleted condition among the conditions already selected by the user, and delete the determined to-be-deleted condition. The condition deleted by the user will no longer be used as a condition already selected by the user.

In addition, in one or more embodiments of this specification, the terminal can also obtain, in response to a creation operation initiated by the user, a new condition created by the user, and use the new condition as a condition selected by the user.

In one or more embodiments of this specification, the service execution method can be implemented by a system. In addition, in a process of generating a target rule, a container is allocated to a user, and an independent kernel is used to implement environment isolation in the process of constructing the target rule. Because an independent container and kernel are allocated to each user, construction requests initiated by different users to start constructing target rules can be isolated, and operations of different users can be isolated. One container serves only one user, so that data generated and used in the process of constructing the target rule corresponding to a user are securer.

In this specification, the system may include a user interface (UI) for constructing a rule, a front-end service, a back-end service, and a computing framework. The front-end service may include a scheduling module and a data management module. The back-end service may include an interactive computing service, a condition recommendation module, and a data analysis module.

The container is deployed in the back-end service. In addition, the front-end service and the back-end service can be deployed on the same electronic device (terminal or server, etc.) or on different electronic devices.

The response to the user operation in the above-mentioned steps S100 to S108 is implemented based on the scheduling module. The scheduling module is configured to forward data between the user interface and the back-end service. Forwarding data based on the scheduling module can prevent the user from directly accessing the back-end service in the container, making the system securer.

In this specification, after the user closes the user interface, the system can destroy the container to save computing resources. To retain data in the container, the data management module can store the data. The data management module is configured to store data generated and used in the process of constructing the target rule. When the user opens the user interface again, the data management module can reload the data generated and used in the process of constructing the target rule, for example, load data corresponding to content displayed in the user interface, so that the user interface can display the data.

The test on conditions or rules based on the historical service data is implemented by the computing framework. The back-end service is configured to perform at least one of the following: calculating the evaluation indicators, sorting the evaluation indicators, determining sample distribution, performing threshold analysis, etc., based on test results of conditions or temporary rules and the historical service data in the computing framework. In other words, the condition recommendation and node analysis of the third module in FIG. 2 are implemented by the back-end service.

Specifically, the interactive computing service in the back-end service is configured to interact with the scheduling module. The condition recommendation module is configured to obtain, from the computing framework, a test result of each condition according to each sample determined based on the historical service data, so as to determine the evaluation indicator of each condition based on the test result and types of evaluation indicators, sort the conditions based on the evaluation indicators, obtain the sorting result, and return each evaluation indicator and the sorting result as a recommendation result to the interactive computing service to implement condition recommendation.

The data analysis module in the back-end service is configured to obtain evaluation indicators of conditions or rules in a training set and a test set from the computing framework, determine a PR curve, and for each of features included in each condition, determine at least one of distribution of positive and negative samples and distribution of feature values corresponding to the feature, and return an analysis result to the interactive computing service to implement condition analysis (node analysis).

The computing framework is configured to obtain samples from the data system to test conditions or temporary rules based on various sample and determine test results. Based on the computing framework, a computing speed can be increased. Even if both the samples and conditions are large data sets, the test results can be quickly calculated, so that the back-end service can quickly determine the evaluation indicators based on the test results.

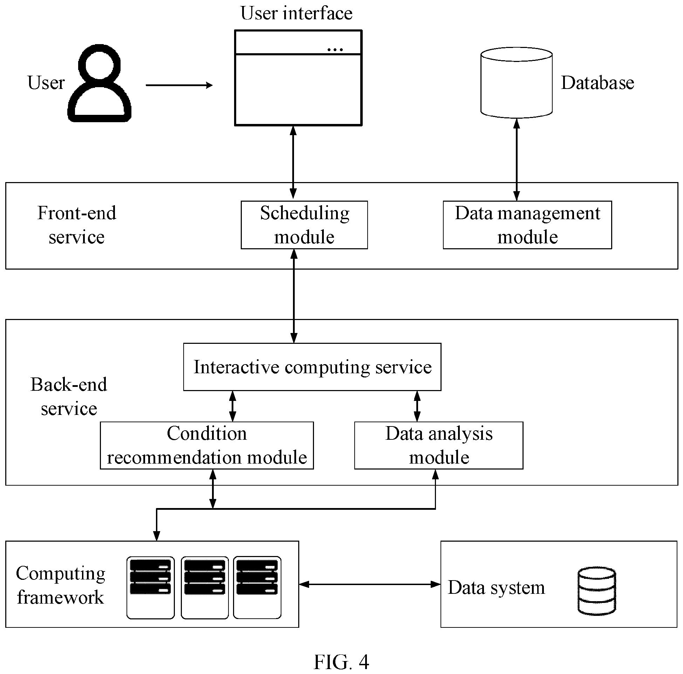

For ease of understanding, this specification also provides a schematic diagram illustrating a system framework shown in FIG. 4.

As shown in FIG. 4, the user can initiate a rule generation operation through the user interface. The user interface sends a construction request to the scheduling module of the front-end service of the terminal, and the scheduling module can forward the construction request to the interactive computing service of the back-end service based on the construction request and in response to the generation operation of the user. Then the interactive computing service sends a recommendation request to the condition recommendation module and an analysis request to the data analysis module separately based on the construction request.

The condition recommendation module can obtain, from the computing framework based on the recommendation request, the test result of each condition according to each sample determined based on the historical service data, to determine the recommendation result based on the test result and return the recommendation result to the interactive computing service. The interactive computing service can send the recommendation result to the scheduling module, so that the scheduling module returns the recommendation result to the user interface for displaying. The samples used to determine the test result are obtained by the computing framework from the data system.

The data analysis module can obtain, from the computing framework based on the analysis request sent by the interactive computing service, the test result of each condition based on each sample, determine the analysis result based on the test result, and return the analysis result to the interactive computing service. The interactive computing service can send the analysis result to the scheduling module, so that the scheduling module returns the analysis result to the user interface for displaying.

In the process of constructing the target rule, the data management module can interact with a database to store the data generated and used in the process of constructing the target rule.

The interactive computing service may be a Jupyter service or Zeppelin. In addition, in this specification, the container may be deployed in an open source container orchestration system (Kubernetes, K8s) cluster.

When the user opens the user interface, the system can create a new container. After the container is started, the interactive computing service can be started. The response to the operation of the user in the user interface can be achieved through data interaction between a Jupyter client of the scheduling module and a back-end Jupyter service.

Furthermore, in this specification, the computing framework may be a big data computing framework, to support computation of a large amount of data, improve computing efficiency, and reduce the response time to user operations, so that the electronic device corresponding to the user interface uses variables and data cached in a remote cluster as if they were stored locally. For example, the computing framework may be a distributed computing engine: a ray framework or a spark framework.

Because the computing framework is implemented by a server cluster, in this specification, when testing conditions or temporary rules based on various historical service data, the system can group various historical service data into several sample groups, and one sample group includes some samples. One sample group is allocated to one server for testing each condition or temporary rule. After each server obtains test results obtained based on some samples, the server can interact and aggregate the test results to obtain test results corresponding to each condition or temporary rule and determined based on all samples, and send the test results corresponding to each condition or temporary rule obtained through final aggregation to one of representative servers, and the representative server aggregates the test results of the conditions to obtain the test results of all conditions or all temporary rules. Then the test results of all conditions or the test results of the temporary rules are sent to the condition recommendation module and the data analysis module in the back-end service.

Therefore, in step S106, when the degree of reasonableness of each temporary rule is tested based on the historical service data and the evaluation indicator corresponding to each candidate condition is determined based on the degree of reasonableness of each temporary rule, for each server in the server cluster corresponding to the computing framework, the server can obtain a group of samples from the data system, test each temporary rule based on the obtained group of samples, and determine a quantity of samples that meet the temporary rule as a test result of the server. Each server corresponds to one target temporary rule, and the server serves as a target server of the target temporary rule.

Then the server can send, for each temporary rule, the quantity of samples that meet the temporary rule to the target server of the temporary rule. In addition, the server can receive a quantity of samples meeting its own target rule and sent by other servers. After the server receives the quantity of samples corresponding to its own target rule, the server can send its own target rule and the quantity of samples that meet its own target rule to the representative server in the server cluster. The representative server sends the target rule of each server and the corresponding quantity of samples that meet the target rule to the back-end service.

The quantity of samples that meet the rule may be determined based on positive samples only or determined based on positive samples and negative samples.

In one or more embodiments of this specification, when the computing framework is a ray framework, each server in the server cluster corresponds to one worker process, and the representative server corresponds to one driver process.

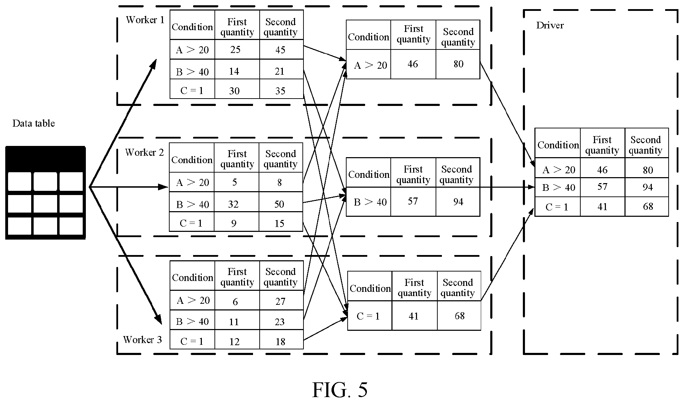

FIG. 5 is a schematic diagram for determining a test result, according to this specification. FIG. 5 uses testing of conditions as an example for description. As shown in the figure, each server associated with the computing framework obtains a group of samples from a data table of the data system. One worker process corresponds to one server. A worker-1 process, a worker-2 process, and a worker-3 process correspond to different servers. It can be learned that the worker-1 process tests each condition (condition 1: A > 20, condition 2: B > 40, and condition 3: C = 1) by using some samples obtained by the worker-1 process, to determine a first quantity and a second quantity. The first quantity is a quantity of positive samples that meet a condition, and the second quantity is a quantity of samples that meet a condition among the positive and negative samples.

As can be learned, worker 1 obtains the following through calculation: For condition 1, the first quantity is 25, and the second quantity is 45; for condition 2, the first quantity is 14, and the second quantity is 21; and for condition 3, the first quantity is 30, and the second quantity is 35. Worker 2 obtains the following through calculation: For condition 1, the first quantity is 5, and the second quantity is 8; for condition 2, the first quantity is 32, and the second quantity is 50; and for condition 3, the first quantity is 9, and the second quantity is 15. Worker 3 obtains the following through calculation: For condition 1, the first quantity is 6, and the second quantity is 27; for condition 2, the first quantity is 11, and the second quantity is 23; and for condition 3, the first quantity is 12, and the second quantity is 18. Then each worker process interacts, aggregates some test results obtained by the worker process through calculation, and determines the first quantity and second quantity for a condition corresponding to the worker process among all samples obtained from the data table, and obtains test results of the conditions determined based on all samples. Then each process can send the test result of the condition corresponding to the process to the driver process, and the driver process can merge the test results of various worker processes to obtain the test result of each condition.

As can be learned from FIG. 5, worker 1 corresponds to condition 1, and the first quantity for condition 1 determined based on all samples obtained from the data table is 46, and the second quantity is 80. Worker 2 corresponds to condition 2, and the first quantity for condition 2 determined based on all samples obtained from the data table is 57, and the second quantity is 94. Worker 3 corresponds to condition 3, and the first quantity for condition 3 determined based on all samples obtained from the data table is 41, and the second quantity is 68.

It can be learned from the test results determined by the driver that the first quantity and the second quantity for each condition are merged.

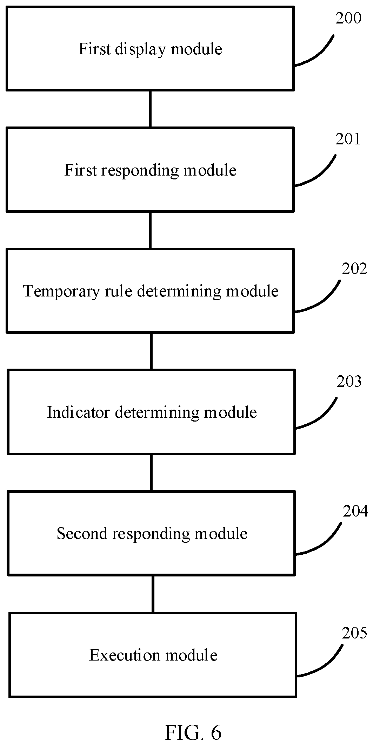

FIG. 6 is a schematic diagram illustrating a service execution apparatus, according to this specification. The apparatus includes: a first display module 200, configured to display each condition used to construct a rule and an evaluation indicator corresponding to each condition, where for each condition, the evaluation indicator represents a degree of reasonableness of rule construction using the condition; a first responding module 201, configured to determine, in response to a selection operation of a user, conditions selected by the user from candidate conditions; a temporary rule determining module 202, configured to determine, for each candidate condition, a temporary rule based on the candidate condition and the conditions already selected by the user; an indicator determining module 203, configured to test a degree of reasonableness of each temporary rule based on historical service data, determine, based on the degree of reasonableness of each temporary rule, an evaluation indicator corresponding to each candidate condition, and display the evaluation indicator; a second responding module 204, configured to determine a target rule in response to a determining operation of the user; and an execution module 205, configured to execute, when an instruction for invoking the target rule is received, a service based on the target rule and service data corresponding to the invocation instruction.

Optionally, the first display module 200 is further configured to determine a service conclusion corresponding to each piece of historical service data, to determine each positive sample and each negative sample; for each condition used to construct the rule, determine a quantity of positive samples or negative samples that meet the condition; determine, based on the quantity of the positive samples or the negative samples that meet the condition, the evaluation indicator corresponding to the condition; and display at least some conditions and evaluation indicators corresponding to the conditions.

Optionally, the first display module 200 is further configured to: when the target rule is used to filter positive samples, determine, based on the quantity of the positive samples that meet the condition and a total quantity of samples that meet the condition, the evaluation indicator corresponding to the condition; or when the target rule is used to filter negative samples, determine, based on the quantity of the negative samples that meet the condition and a total quantity of samples that meet the condition, the evaluation indicator corresponding to the condition.

Optionally, the temporary rule determining module 202 is further configured to determine, in response to a selection operation of the user, a target condition from the conditions already selected by the user, and obtain configuration data; determine, for each candidate condition, a connection relationship between the candidate condition and the target condition based on the configuration data; and add, based on the connection relationship, the candidate condition to the conditions already selected by the user, to obtain the temporary rule, where the connection relationship includes at least one of an "AND" connection or an "OR" connection.

Optionally, the indicator determining module 203 is further configured to determine a service conclusion corresponding to each piece of historical service data, to determine each positive sample and each negative sample; for each temporary rule, test the temporary rule based on each sample to determine a quantity of samples that meet the temporary rule; determine a type of evaluation indicator in the current test based on configuration data, where the type of evaluation indicator includes at least one of precision or recall; and when the type of evaluation indicator is precision, use samples that belong to a same type as samples that the target rule is used to filter, among the samples that meet the temporary rule, as correctly classified samples, use a ratio of a quantity of the correctly classified samples to a quantity of the samples that meet the temporary rule as the degree of reasonableness of the temporary rule, and use the degree of reasonableness as the evaluation indicator of the candidate condition in the temporary rule; or when the type of evaluation indicator is recall, use a ratio of a quantity of positive samples among the samples that meet the temporary rule to a total quantity of positive samples among all samples as the degree of reasonableness of the temporary rule, and use the degree of reasonableness as the evaluation indicator of the candidate condition in the temporary rule.

Optionally, the temporary rule determining module 202 is further configured to determine, in response to a selection operation of the user, a target condition from the conditions already selected by the user, and obtain configuration data; determine a type of evaluation indicator in the current test based on the configuration data; and when the type of evaluation indicator is rule similarity, replace, for each candidate condition, the target condition with the candidate condition to obtain the temporary rule.

Optionally, the indicator determining module 203 is further configured to determine a pending rule based on the conditions already selected by the user; determine each sample based on the historical service data; for each temporary rule, test the temporary rule and the pending rule separately based on each sample, determine samples that meet the temporary rule to obtain a first sample set, and determine samples that meet the pending rule to obtain a second sample set; determine an intersection over union of the first sample set and the second sample set as a similarity between the temporary rule and the pending rule; and use the determined similarity as the degree of reasonableness of the temporary rule, and use the degree of reasonableness as the evaluation indicator of the candidate condition in the temporary rule.

Optionally, the indicator determining module 203 is further configured to determine a pending rule based on the conditions already selected by the user; determine a positive sample from each piece of historical service data; for each temporary rule, test the temporary rule and the pending rule separately based on each positive sample, determine each positive sample that meets the temporary rule to obtain a third sample set, and determine each positive sample that meets the pending rule to obtain a fourth sample set; determine an intersection over union of the third sample set and the fourth sample set as a similarity between the temporary rule and the pending rule; and use the determined similarity as the degree of reasonableness of the temporary rule, and use the degree of reasonableness as the evaluation indicator of the candidate condition in the temporary rule.

This specification further provides a computer-readable storage medium. The storage medium stores a computer program, and the computer program can be configured to perform the above-mentioned service execution method.

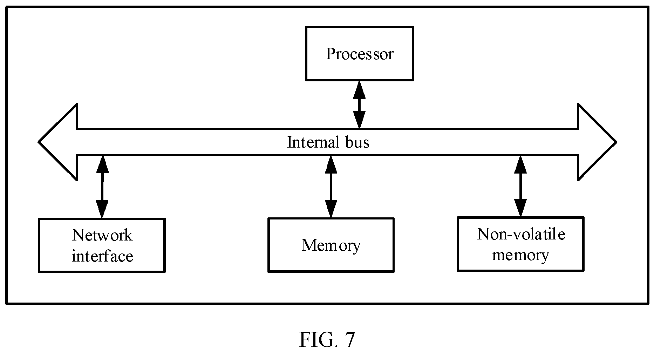

This specification further provides a schematic diagram of a structure of an electronic device shown in FIG. 7. As shown in FIG. 7, in terms of hardware, the electronic device includes a processor, an internal bus, a network interface, a memory, and a non-volatile memory, and certainly may further include hardware needed by another service. The processor reads a corresponding computer program from the non-volatile memory into the memory and runs the computer program, to implement the above-mentioned service execution method. Certainly, in addition to a software implementation, this specification does not rule out another implementation, for example, a logic device or a combination of software and hardware. To be specific, an entity for performing the following processing procedure is not limited to each logic unit, and can be hardware or a logic device.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. A designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Before compilation, source code needs to be written in a particular programming language, which is referred to as a hardware description language (HDL). The HDL is not limited to only one type. Instead, there are many types of HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-highspeed integrated circuit hardware description language (VHDL) and Verilog are most commonly used. A person skilled in the art should also be aware that a hardware circuit that implements a logical method procedure can be readily obtained once the method procedure is logically programmed by using the several hardware description languages and is programmed into an integrated circuit.

A controller can be implemented in any appropriate way. For example, the controller can take a form of a microprocessor or a processor and a computer-readable medium storing computer-readable program code (such as software or firmware) executable by the microprocessor or the processor, a logic gate, a switch, an application-specific integrated circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A memory controller can also be implemented as part of control logic of the memory. A person skilled in the art also knows that, in addition to implementing the controller in a form of pure computer-readable program code, a method step can be logically programmed, so that the controller implements the same function in a form of a logic gate, a switch, an application-specific integrated circuit, a programmable logic controller, an embedded microcontroller, etc. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, in an implementation of this specification, functions of units can be implemented in the same or more software and/or hardware.

A person skilled in the art should understand that the embodiments of this disclosure can be provided as methods, systems, or computer program products. Therefore, this disclosure can use a form of hardware only embodiments, software only embodiments, or embodiments with a combination of software and hardware. In addition, this disclosure can use a form of a computer program product implemented on one or more computer-usable storage media (including but not limited to a magnetic disk storage, a CD-ROM, an optical storage, etc.) that include computer-usable program code.

This disclosure is described with reference to the flowcharts and/or block diagrams of the method, the device (system), and the computer program product according to some embodiments of this disclosure. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a function specified in one or more procedures in the flowcharts and/or one or more blocks in the block diagrams.

These computer program instructions can also be stored in a computer-readable memory that can instruct a computer or another programmable data processing device to work in a specific way, so that an instruction stored in the computer-readable memory generates an artifact including an instruction apparatus, and the instruction apparatus implements a function specified in one or more procedures in the flowcharts and/or one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a function specified in one or more procedures in the flowcharts and/or one or more blocks in the block diagrams.

In a typical configuration, a computing device includes one or more processors (CPUs), one or more input/output interfaces, one or more network interfaces, and one or more memories.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, removable, and non-removable media that can store information by using any method or technology. The information can be a computer-readable instruction, a data structure, a program module, or other data. Examples of the computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD), or another optical storage, a cassette, a cassette magnetic disk storage, or another magnetic storage device or any other non-transmission medium. The computer storage medium can be configured to store information that can be accessed by a computing device. Based on the definition in this specification, the computer-readable medium does not include transitory media such as a modulated data signal and carrier.

It is worthwhile to further note that the terms "comprise", "include", or any other variant thereof are intended to cover a non-exclusive inclusion, so that a process, a method, a product, or a device that includes a list of elements not only includes those elements but also includes other elements which are not expressly listed, or further includes elements inherent to the process, method, product, or device. Without more constraints, an element preceded by "includes a ..." does not preclude existence of other identical elements in the process, method, product, or device that includes the element.

A person skilled in the art should understand that the embodiments of this specification can be provided as methods, systems, or computer program products. Therefore, this specification can use a form of hardware only embodiments, software only embodiments, or embodiments with a combination of software and hardware. In addition, this specification can use a form of a computer program product implemented on one or more computer-usable storage media (including but not limited to a magnetic disk storage, a CD-ROM, an optical storage, etc.) that include computer-usable program code.

This specification can be described in a general context of a computer-executable instruction executed by a computer, for example, a program module. Generally, the program module includes a routine, a program, an object, a component, a data structure, etc. executing a specific task or implementing a specific abstract data type. This specification can also be practiced in a distributed computing environment in which tasks are executed by remote processing devices connected via a communication network. In the distributed computing environment, the program module can be located in both local and remote computer storage media including storage devices.

The embodiments of this specification are all described in a progressive way. Mutual reference can be made for the same or similar parts between the embodiments. Each embodiment focuses on differences from other embodiments. Particularly, a system embodiment is similar to a method embodiment, and therefore is described briefly. For related parts, reference can be made to related descriptions in the method embodiment.

The above-mentioned descriptions are merely some embodiments of this specification and are not intended to limit this specification. A person skilled in the art can make various modifications or changes to this specification. Any modification, equivalent replacement, or improvement made without departing from the spirit and principle of this application shall fall within the scope of the claims of this specification.

## Claims

1. A service execution method, wherein the method comprises:
displaying each condition used to construct a rule and an evaluation indicator corresponding to each condition, wherein for each condition, the evaluation indicator represents a degree of reasonableness of rule construction using the condition;
determining, in response to a selection operation of a user, conditions selected by the user from candidate conditions;
determining, for each candidate condition, a temporary rule based on the candidate condition and the conditions already selected by the user;
testing a degree of reasonableness of each temporary rule based on historical service data, determining, based on the degree of reasonableness of each temporary rule, an evaluation indicator corresponding to each candidate condition, and displaying the evaluation indicator;
determining a target rule in response to a determining operation of the user; and
when an instruction for invoking the target rule is received, executing a service based on the target rule and service data corresponding to the invocation instruction.

2. The method according to claim 1, wherein the displaying each condition used to construct a rule and an evaluation indicator corresponding to each condition specifically comprises:
determining a service conclusion corresponding to each piece of historical service data, to determine each positive sample and each negative sample;
for each condition used to construct the rule, determining a quantity of positive samples or negative samples that meet the condition;
determining, based on the quantity of the positive samples or the negative samples that meet the condition, the evaluation indicator corresponding to the condition; and
displaying at least some conditions and evaluation indicators corresponding to the conditions.

3. The method according to claim 2, wherein the determining, based on the quantity of the positive samples or the negative samples that meet the condition, the evaluation indicator corresponding to the condition specifically comprises:
when the target rule is used to filter positive samples, determining, based on the quantity of the positive samples that meet the condition and a total quantity of samples that meet the condition, the evaluation indicator corresponding to the condition; or
when the target rule is used to filter negative samples, determining, based on the quantity of the negative samples that meet the condition and a total quantity of samples that meet the condition, the evaluation indicator corresponding to the condition.

4. The method according to claim 1, wherein the determining, for each candidate condition, a temporary rule based on the candidate condition and the conditions already selected by the user specifically comprises:
determining, in response to a selection operation of the user, a target condition from the conditions already selected by the user, and obtaining configuration data;
determining, for each candidate condition, a connection relationship between the candidate condition and the target condition based on the configuration data; and
adding, based on the connection relationship, the candidate condition to the conditions already selected by the user, to obtain the temporary rule, wherein
the connection relationship comprises at least one of an "AND" connection or an "OR" connection.

5. The method according to claim 1, wherein the testing a degree of reasonableness of each temporary rule based on historical service data, and determining, based on the degree of reasonableness of each temporary rule, an evaluation indicator corresponding to each candidate condition specifically comprises:
determining a service conclusion corresponding to each piece of historical service data, to determine each positive sample and each negative sample;
for each temporary rule, testing the temporary rule based on each sample to determine a quantity of samples that meet the temporary rule;
determining a type of evaluation indicator in the current test based on configuration data, wherein the type of evaluation indicator comprises at least one of precision or recall; and
when the type of evaluation indicator is precision, using samples that belong to a same type as samples that the target rule is used to filter, among the samples that meet the temporary rule, as correctly classified samples, using a ratio of a quantity of the correctly classified samples to a quantity of the samples that meet the temporary rule as the degree of reasonableness of the temporary rule, and using the degree of reasonableness as the evaluation indicator of the candidate condition in the temporary rule; or
when the type of evaluation indicator is recall, using a ratio of a quantity of positive samples among the samples that meet the temporary rule to a total quantity of positive samples among all samples as the degree of reasonableness of the temporary rule, and using the degree of reasonableness as the evaluation indicator of the candidate condition in the temporary rule.

6. The method according to claim 1, wherein the determining, for each candidate condition, a temporary rule based on the candidate condition and the conditions already selected by the user specifically comprises:
determining, in response to a selection operation of the user, a target condition from the conditions already selected by the user, and obtaining configuration data;
determining a type of evaluation indicator in the current test based on the configuration data; and
when the type of evaluation indicator is rule similarity, replacing, for each candidate condition, the target condition with the candidate condition to obtain the temporary rule.

7. The method according to claim 6, wherein the testing a degree of reasonableness of each temporary rule based on historical service data, and determining, based on the degree of reasonableness of each temporary rule, an evaluation indicator corresponding to each candidate condition specifically comprises:
determining a pending rule based on the conditions already selected by the user;
determining each sample based on the historical service data;
for each temporary rule, testing the temporary rule and the pending rule separately based on each sample, determining samples that meet the temporary rule to obtain a first sample set, and determining samples that meet the pending rule to obtain a second sample set;
determining an intersection over union of the first sample set and the second sample set as a similarity between the temporary rule and the pending rule; and
using the determined similarity as the degree of reasonableness of the temporary rule, and using the degree of reasonableness as the evaluation indicator of the candidate condition in the temporary rule.

8. The method according to claim 6, wherein the testing a degree of reasonableness of each temporary rule based on historical service data, and determining, based on the degree of reasonableness of each temporary rule, an evaluation indicator corresponding to each candidate condition specifically comprises:
determining a pending rule based on the conditions already selected by the user;
determining a positive sample from each piece of historical service data;
for each temporary rule, testing the temporary rule and the pending rule separately based on each positive sample, determining each positive sample that meets the temporary rule to obtain a third sample set, and determining each positive sample that meets the pending rule to obtain a fourth sample set;
determining an intersection over union of the third sample set and the fourth sample set as a similarity between the temporary rule and the pending rule; and
using the determined similarity as the degree of reasonableness of the temporary rule, and using the degree of reasonableness as the evaluation indicator of the candidate condition in the temporary rule.

9. A service execution apparatus, wherein the apparatus comprises:
a first display module, configured to display each condition used to construct a rule and an evaluation indicator corresponding to each condition, wherein for each condition, the evaluation indicator represents a degree of reasonableness of rule construction using the condition;
a first responding module, configured to determine, in response to a selection operation of a user, conditions selected by the user from candidate conditions;
a temporary rule determining module, configured to determine, for each candidate condition, a temporary rule based on the candidate condition and the conditions already selected by the user;
an indicator determining module, configured to test a degree of reasonableness of each temporary rule based on historical service data, determine, based on the degree of reasonableness of each temporary rule, an evaluation indicator corresponding to each candidate condition, and display the evaluation indicator;
a second responding module, configured to determine a target rule in response to a determining operation of the user; and
an execution module, configured to execute, when an instruction for invoking the target rule is received, a service based on the target rule and service data corresponding to the invocation instruction.

10. A computer-readable storage medium, wherein the storage medium stores a computer program, and when the computer program is executed by a processor, the method according to any one of claims 1 to 8 is implemented.

11. An electronic device, comprising a memory, a processor, and a computer program stored in the memory and capable of running on the processor, wherein when the processor executes the program, the method according to any one of claims 1 to 8 is implemented.
